# EUROPÄISCHE PATENTANMELDUNG

(11) **EP 1 246 397 A2**
(43) Veröffentlichungstag der Anmeldung: **02.10.2002**
(21) Anmeldenummer: 02090068.4
(22) Anmeldetag: 22.02.2002
(51) Int. Cl.: H04L 12/26, H04L 12/14

(54) **Verfahren zur Unterscheidung zwischen Intranet - und Internetverkehr bei Nutzung eines Kommunikationsnetzes und entsprechende Funktionseinheit**

(30) Priorität: 26.03.2001 DE 10115743
(71) Anmelder: SIEMENS AKTIENGESELLSCHAFT, 80333 München (DE)
(72) Erfinder: Foell, Uwe, 14612 Falkensee (DE)

(57) **Zusammenfassung**

Die vorliegende Erfindung betrifft ein Verfahren zur Unterscheidung zwischen Intranet- und Internetverkehr bei Nutzung eines Kommunikationsnetzes (1), das mindestens einen Zugangsbzw. Übergangsnetzknoten (3) aufweist, der bei einem Übergang zum Intranet (2) und/oder zum Internet (4) passiert wird, wobei durch eine Funktionseinheit (8) des Zugangs- bzw. Übergangsnetzknotens (3) ein Transfervolumen und/oder eine Verbindungsdauer in Abhängigkeit einer Zieladresse erfasst wird und dies mindestens einer Funktion (7) des Kommunikationsnetzes (1) zur Weiterverarbeitung übermittelt wird. Ferner betrifft die Erfindung eine entsprechende Funktionseinheit (8) eines Kommunikationsnetzes (1), die in einen Zugangs- bzw. Übergangsnetzknoten (3) des Kommunikationsnetzes (1), der bei einem Übergang zum Intranet (2) und/oder zum Internet (4) passiert wird, integrierbar ist, wobei die Funktionseinheit (8) ein Transfervolumen und/oder eine Verbindungsdauer in Abhängigkeit einer Zieladresse erfassen kann.

## Beschreibung

Die vorliegende Erfindung betrifft ein Verfahren zur Unterscheidung zwischen Intranet- und Internetverkehr bei Nutzung eines Kommunikationsnetzes, insbesondere eines Mobilfunknetzes und eine entsprechende Funktionseinheit zur Realisierung des erfindungsgemäßen Verfahrens.

Für verbindungsorientierte Kommunikationsdienste in einem Kommunikationsnetz ist es bekanntlich möglich, die Verbindungen durch ein Intelligentes Netz (IN) steuern zu lassen. So ist beispielsweise für Mobilfunknetze nach dem GSM-Standard (GSM: Global System for Mobile Communication) eine CAMEL-Plattform (CAMEL: Customized Applications for Mobile network Enhanced Logic) definiert, um eine weltweite Nutzung der Leistungsmerkmale des Intelligenten Netzes zu ermöglichen. Die übliche Architektur des Intelligenten Netzes sieht eine Dienstevermittlungsfunktion (SSF: Service Switching Function) und eine Dienstesteuerungsfunktion (SCF: Service Control Function) vor, die über eine Signalisierungsstrecke miteinander verbunden sind. Zur Kommunikation wird hierbei ein spezielles Protokoll verwendet, das für das Mobilfunknetz aus dem CAP-Protokoll (CAMEL Application Part) besteht.

In bestehende Mobilfunknetze nach dem GSM-Standard sind Datendienste wie der Paketdatendienst GPRS (General Packet Radio Service) eingeführt. Die Übertragung im Mobilfunknetz findet hierbei nicht verbindungsorientiert, sondern in Form von Paketdaten statt. Diese Art der Übertragung nutzt die gegebenen Übertragungsressourcen im Mobilfunknetz besser aus. Die Architektur für den Paketdatendienst geht davon aus, dass das vom Teilnehmer benutzte stationäre oder mobile Kommunikationsendgerät, z.B. eine Mobilstation, an ihrem jeweiligen Aufenthaltsort von einem Dienstenetzknoten (SGSN: Service GPRS Support Node) bedient wird. Um Paketdaten zu empfangen oder zu senden, ist der Zugang zu einem entsprechenden Netz, d.h. zu einem Paketdatennetz notwendig. Zu diesem Zweck werden Zugangsnetzknoten (GGSN: Gateway GPRS Support Nodes) bereitgestellt, die jeweils den Zugang zu dem Paketdatennetz, z.B. dem Internet, realisieren und ein bestimmtes Paketdatenprotokoll, z.B. das Internet Protokoll (IP), unterstützen. Zwischen dem Dienstenetzknoten und dem Zugangsnetzknoten ist im Mobilfunknetz ein Tunnel vorgesehen, über den die Pakete übertragen werden. Zudem verfügt ein Kommunikationsnetz im Allgemeinen über eine Gebührenerfassungsfunktion, mit deren Hilfe die Gebührenberechnung bei Nutzung des Kommunikationsnetzes erfolgt. Die Gebührenerfassungsfunktion ist dabei nicht notwendigerweise eine isolierte Software-Funktion, sondern sie kann sich vielmehr aus mehreren Teilkomponenten zusammensetzen. Das Erfassen der gebührenrelevanten Daten findet in mehreren Netzelementen statt. Für sogenannte Pre-Paid Kunden ist die SCF das relevante Element. Für sogenannte Post-Paid Kunden wird diese Funktion sowohl durch den SGSN als auch durch den GGSN ausgeführt. Zur Gebührenberechnung ist demnach keine isolierte Software-Funktion vorgesehen, sondern vielmehr mehrere Teilkomponenten, die über viele Softwarefunktionen verteilt sind.

Zudem weist ein Kommunikationsnetz immer häufiger Inhalts-Server auf, worüber es dem Netzwerkbetreiber möglich ist, neben reinen Kommunikationsdiensten auch Inhalte anzubieten. Die Summe der Paketinfrastruktur und der Inhalts-Server bildet das Intranet des Mobilfunkbetreibers. Bei dem Intranet handelt es sich im Rahmen der vorliegenden Erfindung um ein Paketnetz, welches unter der Verwaltung des Netzwerkoperators des entsprechenden Kommunikationsnetzes steht. Im Gegensatz zu dem öffentlichen Internet, werden alle Transportstrecken und Server, beispielsweise ein Inhalts-Server, innerhalb des Kommunikationsnetzes durch den Netzwerkoperator des Kommunikationsnetzes betrieben. Ein Inhalts-Server ist dabei im Allgemeinen eine Plattform, welche Inhalte wie z. B. aktuelle Informationen oder Entertainment bereitstellt. Ein Inhalts-Server kann sich sowohl im Internet als auch im administrativen Bereich des Operators befinden.

Sowohl für die Inanspruchnahme von reinen Kommunikationsdiensten wie auch für Anforderungen von Inhalten aus dem Intranet oder aus dem Internet müssen Transportverbindungen zwischen dem Kommunikationsnetzteilnehmer und einer von ihm gewählten Zieladresse aufgebaut werden. Dabei werden Gebühren für den Kommunikationsnetzteilnehmer fällig. Die Gebühren werden sowohl für das Bereitstellen der Transportinfrastruktur als auch für den Inhalt erhoben.

Die existierenden mobilen Datennetze, wie beispielsweise GPRS (General Packet Radio Service), erfassen Gebühren auf Ebene der genutzten Transportressourcen des Netzes, d.h. entweder entsprechend einer Verbindungsdauer oder entsprechend einem Transfer- bzw. Datenvolumen.

Im Falle von Pre-Paid Kunden wird beim Aufbau einer Transportverbindung die Gebührenerfassungsfunktion über eine entsprechende Schnittstelle, beispielsweise über eine CAP-Schnittstelle, informiert. Die Gebührenerfassungsfunktion fordert daraufhin den entsprechenden Dienstenetzknoten, beispielsweise den entsprechenden SGSN auf, den angefallenen Verkehr zu messen und die Ergebnisse zurück zur Gebührenerfassungsfunktion zu melden. Der Dienstenetzknoten erfasst die genutzten Ressourcen auf Ebene der übertragenen Daten, d.h. auf Ebene des Transfervolumens, oder auf Ebene der Verbindungsdauer.

Eine Aufgabe der Erfindung war es, ein Verfahren bereitzustellen, mit dessen Hilfe es einem Netzwerkbetreiber möglich ist, einfach und schnell zwischen Inhalten aus dem eigenen Netz und dem öffentlichen Internet, insbesondere zum Zweck der Gebührenberechnung, zu unterscheiden.

Gelöst wird diese Aufgabe durch das erfindungsgemäße Verfahren gemäß Anspruch 1 und einer entsprechenden erfindungsgemäßen Funktionseinheit gemäß Anspruch 4. Weitere vorteilhafte Ausführungsformen sind in den entsprechenden Unteransprüchen aufgeführt.

Gemäß Anspruch 1 wird erfindungsgemäß ein Verfahren zur Unterscheidung zwischen Intranet- und Internetverkehr bei Nutzung eines Kommunikationsnetzes bereitgestellt, das mindestens einen Zugangsnetzknoten aufweist, der bei einem Übergang zum Intranet und/oder zum Internet passiert wird, wobei durch eine Funktionseinheit des Zugangsnetzknotens ein Transfervolumen und/oder eine Verbindungsdauer in Abhängigkeit einer Zieladresse erfasst wird und dies mindestens einer Funktion des Kommunikationsnetzes zur Weiterverarbeitung übermittelt wird.

Bei der mindestens einen Funktion des Kommunikationsnetzes kann es sich insbesondere um eine Funktion zur Gebührenberechnung handeln, die im folgenden als Payment-Server bezeichnet wird. Der Payment-Server kann beispielsweise aufgrund dieser ihm von der erfindungsgemäßen Funktionseinheit übermittelten Daten, nämlich eines Transfervolumens und/oder einer Verbindungsdauer in Abhängigkeit einer Zieladresse, einen höheren Preis für den Internetverkehr festlegen. Möglicherweise zieht der Netzwerkbetreiber daraus den Vorteil, dass es zu einem höheren Intranetverkehr bei insgesamt gleicher Leistung kommt.

Der Payment-Server bekommt die Daten für einen Zugang eines Kommunikationsteilnehmers, wie bereits bekannt, von einem entsprechenden Dienstenetzknoten SGSN über eine CAP-Schnittstelle mitgeteilt. Die Daten umfassen sowohl die Adresse des Zugangs- bzw. Übergangsnetzknotens, beispielsweise eines GGSN in einem Mobilfunknetz, als auch die Adresse des entsprechenden von dem Kommunikationsteilnehmer gewählten Zugangsknotens im Internet.

In einer bevorzugten Ausführungsform des Verfahrens initiiert der Payment-Server durch Übermittlung der Zieladresse an die Funktionseinheit des Zugangs- bzw. Übergangsknotens, dass die Funktionseinheit das Transfervolumen als auch die Verbindungsdauer des Kommunikationsteilnehmers in Abhängigkeit von der Zieladresse erfasst und dies dem Payment-Server übermittelt.

Vorzugsweise erfolgt die Übermittlung zwischen der Funktionseinheit des Zugangs- bzw. Übergangsknotens und der mindestens einen eine Weiterverarbeitung der übermittelten Information ermöglichenden Funktion des Kommunikationsnetzes, beispielsweise eines Payment-Servers mittels eines Standard-Internetprotokolls, vorzugsweise mittels RADIUS oder DIAMETER.

Da die Anzahl der Übergänge des Mobilfunknetzes zum Internet endlich ist, kann die Funktionseinheit des Zugangs- bzw. Übergangknotens GGSN den Anteil des Verkehrs der über diese Übergänge ins Internet geht bestimmen und beispielsweise dem Payment-Server mitteilen. Die Funktionseinheit kann ferner eine Liste anlegen und verwalten, anhand derer die Art des Verkehrs bestimmt werden kann. Der Payment-Server kann aufgrund dieser Daten einen höheren Preis für den Internetverkehr festlegen, was möglicherweise zu einem höheren Intranetverkehr bei insgesamt gleicher Leistung führen könnte. Die Ergebnisse der Erfassung dieser Daten können auch von anderen Funktionen des Kommunikationsnetzes, wie beispielsweise von einer Statistik oder einer Verkehrsleitung und/oder -kontrolle benutzt werden.

Das Kommunikationsnetz bietet zudem die Möglichkeit, einem Teilnehmer des Kommunikationsnetzes einen Inhalt, beispielsweise ein Musiktitel zu verkaufen. Der Preis des Musikstückes beinhaltet bereits alle Kosten für die Transportressourcen. Um die Transportressourcen, welche im Dienstenetzknoten eines Teilnehmers erfasst werden, nicht dem Konto des Teilnehmers in Rechnung zu stellen, falls dieser Inhalte aus dem internen Inhalts-Server, d.h. aus dem Intranet anfordert, sendet der Inhalts-Server eine Nachricht, welche das Datenvolumen beinhaltet, an die Transportadresse, die sogenannte IP-Adresse, des Teilnehmers. Die IP-Adresse wird im Zugangs- bzw. Übergangsknoten GGSN verwaltet. Vorzugsweise kann diese Nachricht der erfindungsgemäßen Funktionseinheit des Zugangs- bzw. Übergangsknotens über eine Zusatzadresse, beispielsweise eine IP-Port Number, zugestellt werden. Die Zusatzadresse ist notwendig um die spezielle Information vom normalen Datenstrom des Teilnehmers zu unterscheiden. Die Funktionseinheit informiert sodann den Payment-Server über das nicht in Rechnung zu stellende Datenvolumen. Mittels dieser erfindungsgemäßen Vorgehensweise können Produkte derart verkauft werden, dass der Kunde den genauen Preis vor Abschluss des Geschäftes kalkulieren kann.

Für Post-Paid-Kunden ist das erfindungsgemäße Verfahren entsprechend anwendbar.
Die Funktionseinheit des Zugangs- bzw. Übergangsknotens kann hier jedoch die Daten direkt in vorhandene Gebührendatensätze schreiben und muss diese nicht an den Payment-Server weiterleiten.

Ferner betrifft die Erfindung eine entsprechende, d.h. eine zur Durchführung des erfindungsgemäßen Verfahrens notwendige Funktionseinheit eines Kommunikationsnetzes, die in einen Zugangsnetzknoten integrierbar ist, wobei die Funktionseinheit ein Transfervolumen und/oder eine Verbindungsdauer in Abhängigkeit einer Zieladresse erfassen kann.

Nachfolgend wird ein Ausführungsbeispiel anhand der folgenden Figur näher erläutert. Es zeigt:

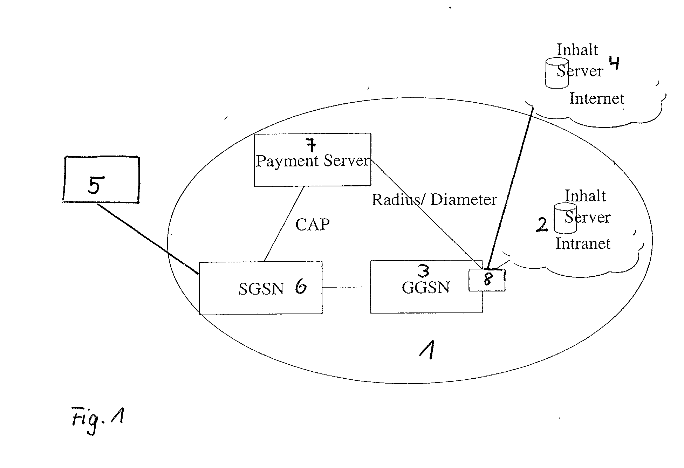

Fig. 1 ein schematisches Ausführungsbeispiel für ein Kommunikationssystem mit einer erfindungsgemäßen Funktionseinheit als Teil eines Zugangs- bzw. Übergangsnetzknotens
Das in Figur 1 dargestellte Kommunikationssystem zeigt ein Kommunikationsnetz 1 mit Einrichtungen, die einen Paketdatendienst GPRS ermöglichen. Das Kommunikationsnetz 1 weist einen internen Inhalts-Server 2 auf, dessen Zugang über einen Zugangs- bzw. Übergangsnetzknoten GGSN 3 ermöglicht wird. Ferner wird über den Zugangs- bzw. Übergangsnetzknoten GGSN 3 der Zugang zu einem externen Inhalts-Server, beispielsweise zum Internet, 4 möglich.

Zur Übertragung von Paketdaten beispielsweise zwischen einer mobilen Station 5 und dem Intranet 2 oder dem Internet 4 weist das Kommunikationsnetz 1 neben dem Zugangs- bzw. Übergangsknoten GGSN 3 mindestens einen Dienstenetzknoten SGSN 6 auf. Der Zugangs- bzw. Übergangsnetzknoten GGSN 3 ist dabei über eine entsprechende Schnittstelle mit dem Intranet 2 bzw. dem Internet 4 verbunden, während der Dienstenetzknoten SGSN 6 über eine weitere Schnittstelle an die mobile Station 5 gekoppelt ist.

Um eine Gebührenberechnung bei Nutzung des Kommunikationsnetzes 1 zu gewähren, weist das Kommunikationsnetz 1 ferner einen Payment-Sever 7 auf, der mit dem Dienstenetzknoten SGSN 6 mittels eines CAP-Protokolls kommuniziert.

Für den Paketdatendienst GPRS existiert zunächst keine Verbindung zu einem Paketdaten-Zugangsnetz. Um den Dienst zu nutzen, muss sich der mobile Teilnehmer zuerst im Netz anmelden - wie auch bei verbindungsorientierten Diensten. Bei dieser Gelegenheit wird seine Identität und Berechtigung überprüft. Im zweiten Schritt muss ein Paketdatenprotokoll aktiviert werden. Das Kommunikationsnetz 1 stellt nun einen Tunnel zwischen dem Dienstenetzknoten SGSN 6 und dem Zugangsbzw. Übergangsnetzknoten GGSN 3 bereit. Danach können über diesen Tunnel Pakete zwischen dem Teilnehmer, bzw. der mobilen Station 5 und dem entsprechenden Paketdatennetz, wie beispielsweise dem Intranet 2 oder dem Internet 4 ausgetauscht werden. Der Payment-Server 7 bekommt die Daten für den Zugang des Teilnehmers mitgeteilt. Die Daten umfassen sowohl die Adresse des Zugangs- bzw. Übergangsknotens GGSN 3 wie auch die Adresse des Zugangsknotens im Internet 4. Aufgrund dieser Daten fordert der Payment-Server 7 eine erfindungsgemäße Funktionseinheit 8 des Zugangs- bzw. Übergangsknotens GGSN 3 auf, das Transfervolumen als auch die Verbindungsdauer des Teilnehmers in Abhängigkeit von der Adresse des Zieles zu erfassen und dem Payment-Server 7 zu melden. Der Payment-Server 7 kann aufgrund dieser Daten einen höheren Preis für den Internetverkehr festlegen und somit einen höheren Intranetverkehr bei gleicher Leistung erzielen.

Fordert der Teilnehmer einen Inhalt aus dem internen Inhalts-Server, d.h. aus dem Intranet 2 an, so soll es möglich sein, dass die für die in Anspruch genommenen Transportressourcen anfallenden Kosten dem Teilnehmer nicht in Rechnung gestellt werden. Der Inhalts-Server 2 sendet deshalb eine Nachricht, welche das Datenvolumen beinhaltet, an die Transportadresse (IP-Adresse) des Teilnehmers, die im Zugangs- bzw. Übergangsnetzknoten GGSN 3 verwaltet wird und über eine Zusatzadresse, z.B. eine IP-Port Number, an die Funktionseinheit 8 des Zugangs- bzw. Übergangsnetzknoten GGSN 3. Die Funktionseinheit 8 wiederum informiert den Payment-Server 7 über das nicht in Rechnung zu stellende Datenvolumen.

## Patentansprüche

1. Verfahren zur Unterscheidung zwischen Intranet- und Internetverkehr bei Nutzung eines Kommunikationsnetzes (1), das mindestens einen Zugangs- bzw. Übergangsnetzknoten (3)aufweist, der bei einem Übergang zum Intranet (2) und/oder zum Internet (4) passiert wird,
**dadurch gekennzeichnet,**
**dass** durch eine Funktionseinheit (8) des Zugangs- bzw. Übergangsnetzknotens (3) ein Transfervolumen und/oder eine Verbindungsdauer in Abhängigkeit einer Zieladresse erfasst wird und dies mindestens einer Funktion (7) des Kommunikationsnetzes (1) zur Weiterverarbeitung übermittelt wird.

2. Verfahren nach Anspruch 1,
**dadurch gekennzeichnet,**
**dass** die Übermittlung zwischen der Funktionseinheit (8) des Zugangs- bzw. Übergangsnetzknotens (3) und der mindestens einen Funktion (7) des Kommunikationsnetzes (1) zur Weiterverarbeitung mittels eines Standard-Internetprotokolls erfolgt.

3. Verfahren nach Anspruch 1 oder 2,
**dadurch gekennzeichnet,**
**dass** die mindestens eine Funktion (7) des Kommunikationsnetzes ein Payment-Server zur Gebührenberechnung ist.

4. Funktionseinheit (8) eines Kommunikationsnetzes (1), die in einen Zugangs- bzw. Übergangsnetzknoten (3) des Kommunikationsnetzes (1), der bei einem Übergang zum Intranet (2) und/oder zum Internet (4) passiert wird, integrierbar ist,
**dadurch gekennzeichnet,**
**dass** die Funktionseinheit (8) ein Transfervolumen und/oder eine Verbindungsdauer in Abhängigkeit einer Zieladresse erfassen kann.
